# EUROPÄISCHE PATENTSCHRIFT

(11) **EP 2 087 259 B1**
(45) Veröffentlichungstag und Bekanntmachung des Hinweises auf die Patenterteilung: **11.05.2011**
(21) Anmeldenummer: 07821252.9
(22) Anmeldetag: 12.10.2007
(51) Int. Cl.: F16H 59/66

(54) **VERFAHREN ZUM FAHRSTRECKENNEIGUNGSABHÄNGIGEN STEUERN UND/ODER REGELN EINES AUTOMATGETRIEBES EINES FAHRZEUGES**
METHOD FOR CONTROL AND/OR REGULATION OF A MOTOR VEHICLE AUTOMATIC TRANSMISSION ACCORDING TO DRIVING ROUTE SLOPE
PROCÉDÉ DE COMMANDE ET/OU DE RÉGLAGE D'UNE BOÎTE DE VITESSES AUTOMATIQUE D'UN VÉHICULE EN FONCTION DE L'INCLINAISON DU PARCOURS

(30) Priorität: 04.11.2006 DE 102006052106
(43) Veröffentlichungstag der Anmeldung: 12.08.2009
(73) Patentinhaber: ZF Friedrichshafen AG, 88038 Friedrichshafen (DE)
(72) Erfinder: WOLFGANG, Werner, 88213 Ravensburg (DE); WINKEL, Matthias, 88250 Weingarten (DE); WENGERT, Bertram, 88677 Markdorf (DE)
(86) Internationale Anmeldenummer: PCT/EP2007/060885
(87) Internationale Veröffentlichungsnummer: WO 2008/052870

(56) Entgegenhaltungen:
- DE-A1- 3 334 719
- DE-A1- 3 831 449
- DE-A1- 4 440 706
- DE-A1- 10 040 549
- DE-A1- 10 135 824
- DE-A1- 19 528 625
- DE-A1- 19 821 725
- DE-A1- 19 939 938
- DE-A1-102004 040 351
- GB-A- 2 329 731
- US-A- 4 471 437
- US-A- 5 832 400

## Beschreibung

Die vorliegende Erfindung betrifft ein Verfahren zum fahrstreckenneigungsabhängigen Steuern und/oder Regeln eines Automatgetriebes eines Fahrzeuges.

Aus der Fahrzeugtechnik sind Verfahren zum fahrstreckenneigungsabhängigen Steuern und/oder Regeln eines Automatgetriebes eines Fahrzeuges bekannt. Bei einem Automatgetriebe mit automatischer Übersetzungswahl ist es üblich, dass die gewünschten Drehzahlen z. B. von bestimmten Eingangsgrößen, wie z. B. von der Fahrpedalstellung und dem damit verbundenen Fahrerwunsch gewählt werden. Dabei werden die Drehzahlen in Abhängigkeit von aktuellen Steigungen bzw. aktuellen Fahrwiderständen des Fahrzeuges variiert und so der erforderliche Leistungsbedarf bei dem Fahrzeug ermittelt.

Es hat sich gezeigt, dass die aktuelle Steigung nur einen Momentanwert wiedergibt und nicht eine Fahrumgebung, wie z. B. eine Passfahrt des Fahrzeuges. Somit erfolgt bei dem bekannten Verfahren bei einer Bergauffahrt, die durch eine kurze ebene Strecke verläuft, eine Drehzahlwahl, die der Drehzahl in einer Ebene entspricht, da dies der aktuellen Steigung entspricht. Somit wird aber nicht die Drehzahl, die bei einer Bergauffahrt erwartet wird, eingestellt.

Aus der Druckschrift DE 44 40 706 A1 ist ein Verfahren und eine Vorrichtung zur streckenneigungsabhängigen Steuerung des Schaltpunktes eines Automatikgetriebes bekannt. Mit diesem Verfahren sollen so genannte Pendelschaltungen wirksam verhindert werden. Dazu wird bei dem Verfahren der aktuelle Steigungswert, der zum Steuern des Fahrzeuggetriebes verwendet wird, stark gefiltert. Durch die Filterung des jeweils aktuellen Steigungswertes wird ein Zeitversatz zwischen dem verwendeten Steigungswert und der aktuellen Steigung erreicht. Durch diese Maßnahme kann jedoch bei Überschreiten des Zeitversatzes auch das vorbeschriebene Problem wieder auftreten.

Darüber hinaus ist aus der Druckschrift DE 38 31 449 C2 ein elektronisches Betriebssteuersystem für einen Kraftfahrzeug-Antriebsstrang bekannt. Auch dieses elektronische Betriebssteuersystem verwendet Betriebszustandsgrößen, um bei der Steuerung topografische Verhältnisse der Fahrstrecke mit zu berücksichtigen. Auch das bekannte Betriebssteuersystem kann das geschilderte Problem nicht vermeiden.

Aus der Druckshrift DE 10 2004 040351 A1 sind die Merkmale des Oberbegriffs des Anspruchs 1 bekannt.

Der vorliegenden Erfindung liegt deshalb die Aufgabe zugrunde, ein Verfahren der eingangs beschriebenen Gattung vorzuschlagen, mit dem eine verbesserte, möglichst realitätsnahe Ansteuerung des Automatgetriebes in Abhängigkeit der Topografie der Fahrstrecke ermöglicht wird.

Diese Aufgabe wird durch die Merkmale des Patentanspruches 1 gelöst. Vorteilhafte Ausgestaltungen ergeben sich insbesondere aus den Unteransprüchen.

Bei dem vorgeschlagenen Verfahren zum fahrstreckenneigungsabhängigen Steuern und/oder Regeln eines Automatgetriebes eines Fahrzeuges wird die Topografie der Fahrstrecke zumindest zeitweise beobachtet und die ermittelten Werte ausgewertet, um möglichst genau den Zeitpunkt festlegen zu können, an dem sich das Fahrzeug tatsächlich an einer Steigung in der Art einer Passfahrt oder dergleichen befindet, um dies dann bei der Ansteuerung des Getriebes zu berücksichtigen.

Auf diese Weise wird durch das erfindungsgemäße Verfahren eine Aussage über die Fahrumgebung bzw. die Fahrstrecke auf der sich das Fahrzeug befindet, bereitgestellt, beispielsweise ob das Fahrzeug eine Normalfahrt in der Ebene oder eine Passfahrt durchführt. Im Gegensatz zu den bekannten Verfahren ist bei dem erfindungsgemäßen Verfahren die Beobachtung der Fahrstrecke zunächst ohne Einfluss auf den zur Drehzahlermittlung verwendeten Steigungswert. Erst bei der Erkennung einer Passfahrt bzw. dem Zurücksetzen einer Passfahrterkennung wird ein Einfluss z. B. auf die Drehzahlermittlung bei dem Automatgetriebe genommen.

Die Möglichkeiten, wie das Verfahren beim Erkennen einer Passfahrt oder beim Zurücksetzen einer Passfahrterkennung Einfluss auf die Ansteuerung des Fahrzeuges nimmt, sind vielzählig. Beispielsweise kann gemäß einer Weiterbildung der Erfindung vorgesehen sein, dass in Abhängigkeit des erkannten Zeitpunktes zum Setzen oder Rücksetzen der Passfahrterkennung vorbestimmte Funktionen aktiviert oder deaktiviert werden. Dadurch lassen sich Funktionen, wie über einen ECO- oder einen POWER-Modeschalter realisieren, mit dem Vorteil, dass dies bei dem erfindungsgemäßen Verfahren fahrerunabhängig erfolgt. Demnach können Fehlbedienungen, hohe unökonomische Drehzahlen beispielsweise in der Ebene bei dem Fahrzeug vermieden werden.

Es ist auch möglich, dass mit dem erfindungsgemäßen Erkennungssignal einer Passfahrt weitere Reaktionen verknüpft werden, z. B. eine Umschaltung des kompletten Fahrprogramms, andere Drehzahlvorgaben durch Auswahl anderer Kennlinien bzw. anderer Kennfelder und/oder die Addition von Offsets. Darüber hinaus können weitere Funktionalitäten, wie z. B. Schaltdrehzahlgrenzen, Schaltgeschwindigkeiten oder dergleichen aktiviert oder auch umparametriert werden.

Eine vorteilhafte Ausführungsvariante des erfindungsgemäßen Verfahrens kann vorsehen, dass das Setzen und Rücksetzen der Passfahrterkennung in Abhängigkeit eines Fahrwiderstandes des Fahrzeuges und/oder in Abhängigkeit eines Steigungswinkels der Fahrstrecke ermittelt wird. Je nach Anwendungsbereich kann der dem erfindungsgemäßen Verfahren zugrunde liegende Algorithmus nur den Fahrwiderstand oder auch nur den Steigungswinkel berücksichtigen. In bestimmten Anwendungsbereichen kann aber auch gerade eine Kombination aus Fahrwiderstand und Steigungswinkel oder auch eine Hinzunahme anderer Parameter eine besonders optimale Ansteuerungen des Automatgetriebes ermöglichen.

Unabhängig ob nun der Fahrwiderstand oder der Steigungswinkel als Parameter zum Setzen einer Passfahrterkennung verwendet wird, ist es zunächst erforderlich einen ersten oberen Grenzwert und einen zweiten unteren Grenzwert festzulegen, wobei der erste Grenzwert den Wert des Fahrwiderstands bzw. des Steigungswinkels angibt, bei dem eine Passfahrterkennung gesetzt werden würde, wenn sich das Fahrzeug über eine durch einen Zähler vorgegebene Zeitspanne an dieser Fahrstrecke befindet. Wenn der Fahrwiderstand bzw. der Steigungswinkel unterhalb des zweiten Grenzwertes absinkt, wird der Zähler eingefroren, d. h. der Zähler bleibt bei seinem Wert bis zum Unterschreiten des ersten Grenzwertes stehen. Erst wenn der erste Grenzwert wieder überschritten wird und der Zähler den Wert Null bzw. einen vorgebbaren Referenzwert annimmt, wird das Bit Passfahrt gesetzt.

Bei der Kombination der Parameter Fahrwiderstand und Steigungswinkel werden die ersten Grenzwerte vorzugsweise mit einer Oder-Verknüpfung verbunden, wobei die beiden zweiten Grenzwerte vorzugsweise mit einer Und-Verknüpfung verbunden werden. Ebenso ist es möglich, die ersten Grenzwerte mit einer Und-Verknüpfung zu verbinden, wobei die zweiten Grenzwerte mit einer Und-Verknüpfung verbunden werden bzw. die ersten Grenzwerte mit einer Oder-Verknüpfung zu verbinden, wobei die zweiten Grenzwerte mit einer Oder-Verknüpfung verbunden werden. Die Werte für die jeweiligen Grenzwerte können je nach Anwendungsbereich gewählt werden.

Eine Weiterbildung der Erfindung sieht vor, dass auch zum Verhindern des Setzens einer Passfahrterkennung ein erster und ein zweiter Grenzwert bestimmt werden. Wenn der Fahrwiderstand bzw. der Steigungswinkel unter den ersten Grenzwert absinkt und der Zeitzähler, der bei der vorbeschriebenen Ausführung zum Setzen einer Passfahrterkennung verwendet wird, bereits gestartet ist, kann ein zweiter Zeitzähler zum Verhindern des Setzens gestartet und eingefroren werden, wenn der Fahrwiderstand bzw. der Steigungswinkel einen zweiten Grenzwert übersteigt. Sobald der zweite Zeitzähler zum Verhindern des Setzens einer Passfahrterkennung den Wert Null bzw. einen vorgebbaren Referenzwert erreicht, werden beide Zeitzähler initialisiert.

Auch bei dieser Vorgehensweise kann eine kombinierte Erkennung dadurch erreicht werden, dass die ersten Grenzwerte des Fahrwiderstandes bzw. des Steigungswinkels mit einer Und-Verknüpfung und die zweiten Grenzwerte mit einer Oder-Verknüpfung verbunden werden. Ebenso ist es wiederum möglich, die ersten Grenzwerte mit einer Und-Verknüpfung zu verbinden, wobei die zweiten Grenzwerte mit einer Und-Verknüpfung verbunden werden bzw. die ersten Grenzwerte mit einer Oder-Verknüpfung zu verbinden, wobei die zweiten Grenzwerte mit einer Oder-Verknüpfung verbunden werden.

Um eine bereits gesetzte Passfahrterkennung wieder zurückzusetzen, kann bei dem erfindungsgemäßen Verfahren vorzugsweise vorgesehen sein, dass die jeweiligen Bedingungen für das Setzen der Passfahrterkennung vorliegen müssen, wobei jedoch der jeweils erste Grenzwert mit dem zweiten Grenzwert vertauscht werden. Ebenso ist es möglich, dass für die entsprechenden Grenzwerte andere geeignete Werte verwendet werden. Dadurch wird der Zeitzähler, der zum Setzen der Passfahrterkennung verwendet wird, gestartet, wenn der Fahrwiderstand bzw. der Steigungswinkel unter den zweiten unteren Grenzwert absinkt. Sobald der Fahrwiderstand bzw. der Steigungswinkel über den ersten Grenzwert steigt, wird der Zeitzähler eingefroren. Erreicht der Zeitzähler den Wert Null bzw. einen vorgebbaren Referenzwert, wird das Bit Passfahrt Zurücksetzen gesetzt. Auch beim Zurücksetzen der Passfahrterkennung ist eine kombinierte Erkennung mit dem Fahrwiderstand und dem Steigungswinkel denkbar.

Das erfindungsgemäße Verfahren sieht gemäß einer nächsten Ausgestaltung auch eine Möglichkeit zum Verhindern des Rücksetzens der Passfahrterkennung vor. Dafür werden wieder ein erster und ein zweiter Grenzwert festgelegt. Wenn der Fahrwiderstand bzw. der Steigungswinkel über den ersten Grenzwert ansteigt und der Zeitzähler, der zum Setzen einer Passfahrterkennung verwendet wird, bereits gestartet ist, wird auch ein zweiter Zeitzähler gestartet, der auch beim Verhindern des Setzens der Passfahrterkennung verwendet wird. Sobald der Fahrwiderstand bzw. der Steigungswinkel unter einen zweiten Grenzwert absinkt, wird der gerade gestartete Zeitzähler eingefroren. Wenn dieser Zeitzähler den Wert Null bzw. einen vorgebbaren Referenzwert erreicht, werden beide Zeitzähler initialisiert und das Signal Passfahrt bleibt gesetzt. Auch bei dieser Ausführung ist eine kombinierte Erkennung mit dem Fahrwiderstand und dem Steigungswinkel möglich.

Im Rahmen einer Weiterbildung kann zumindest einer der Zeitzähler nicht mit konstanten Schrittweiten, sondern in besonders vorteilhafter Weise in Abhängigkeit von den aktuellen Fahrwiderstands- und/oder Steigungswinkelwerten inkrementiert bzw. dekrementiert werden. Dabei ergibt sich der Vorteil, dass bestimmte Parameter entfallen können und somit das erfindungsgemäße Verfahren weiter vereinfacht wird.

Eine nächste Ausgestaltung der vorliegenden Erfindung kann vorsehen, dass bei dem Verfahren anstelle der Zeit auch die Fahrstrecke oder eine Kombination aus Zeit und Fahrstrecke verwendet werden kann, um die Passfahrterkennung durchzuführen. Besonders vorteilhaft ist es auch, wenn z. B. eine Erweiterung des Verfahrens in mehrere Streckenzustände, wie z. B. in eine Talfahrt, eine Fahrt in der Ebene, eine leichte Passfahrt und in eine steile Bergfahrt, vorgenommen wird.

Damit eine Unterbrechung der Fahrt nicht zum Verlust der gewonnenen Signale und Werte führt, kann im Rahmen einer weiteren Ausführung der Erfindung vorgesehen sein, dass die Werte des aktuellen Zustandes beim Ausschalten der Zündung bzw. beim Vorliegen des Signals "Zündung aus" gespeichert werden. Wenn die Zündung eingeschaltet wird bzw. wenn das Signal "Zündung ein" vorliegt, können die gespeicherten Werte des letzten Zustandes wieder geladen werden.

Eine weitere Vereinfachung des erfindungsgemäßen Verfahrens kann dadurch erreicht werden, dass nur ein Zeitzähler und weniger Parameter bzw. Kennlinien bei dem Verfahren verwendet werden. Eine reduzierte Funktion des erfindungsgemäßen Verfahrens kann beispielsweise mit zwei Parametern realisiert werden, wobei beispielsweise ein Grenzwert des Steigungswinkels und ein Aufenthaltswert notwendig sind. Als Aufenthaltswert ist hierbei beispielsweise eine Zeitdauer oder eine Wegstrecke gemeint, während der der Grenzwert des Steigungswinkels über- bzw. unterschritten ist.

Eine zweite mögliche Ausführungsvariante des erfindungsgemäßen Verfahrens kann vorsehen, dass die Passfahrterkennung über die Aufenthaltsdauer an einer Steigung bzw. an einem Gefälle des Fahrzeuges erfolgen kann. Somit wird die Passfahrterkennung unabhängig von einem überwundenen Höhenunterschied durchgeführt. Bei dieser vorteilhaften Ausführungsvariante werden Kennlinien bzw. 3Kennfelder verwendet, um die Topografie der Fahrstrecke entsprechend zu bewerten. Aus dieser Bewertung kann dann entweder ein Flag z_passf gesetzt oder zurückgesetzt werden.

Gemäß einer Weiterbildung der Erfindung kann ein Zeitzähler oder dergleichen verwendet werden, der von einem vorgebbaren Startwert an beginnt zurück- bzw. hoch zu zählen, beispielsweise von 1 000 auf Null bzw. von Null auf 1 000. Das Zurück- bzw. Hochzählen des Startwertes erfolgt dabei durch die von den jeweiligen Kennlinien bzw. Kennfeldern vorgegebenen Inkremente bzw. Dekremente in Abhängigkeit der auftretenden Steigung und des auftretenden Gefälles. Aufgrund der verschiedenen Vorzeichen der Inkremente bzw. Dekremente kann dann der Startwert verringert oder auch je nach Fahrstrecke wieder erhöht werden. Wenn der Startwert den vorgebbaren Referenzwert erreicht, beispielsweise den Wert Null bzw. 1 000, wird entweder eine Passfahrterkennung gesetzt oder eine Passfahrterkennung zurückgesetzt. Danach wird der Zähler wieder auf den Startwert gesetzt und die Vorgabe der Inkremente bzw. Dekremente auf die jeweilige Kennlinie umgeschaltet.

Für die bei dieser Ausführungsvariante erforderlichen Inkremente bzw. Dekremente der Kennlinien können beliebige Werte je nach Anwendungsbereich gewählt werden. Beispielsweise können die Inkremente bzw. Dekremente Werte der Steigung zwischen minus 20 % und 20 % annehmen. Die den Steigungsinkrementen bzw. Steigungsdekrementen jeweils zugeordneten Inkremente bzw. Dekremente der Kennlinien zum Setzen der Passfahrterkennung und zum Rücksetzen der Passfahrterkennung können Werte beispielsweise zwischen 10 und minus 5 zugeordnet werden.

Nachfolgend wird die vorliegende Erfindung anhand der Zeichnungen näher erläutert.

Es zeigen:
- Fig. 1: ein Ablaufdiagramm einer ersten möglichen Ausführungs- variante des Verfahrens mit einer Passfahrterkennung über den Fahrwiderstand und/oder den Steigungswinkel;
- Fig. 2: ein Ablaufdiagramm einer zweiten möglichen Ausführungs- variante der vorliegenden Erfindung über die Aufenthalts- dauer und
- Fig. 3: eine Tabelle mit einem Parametrierungsbeispiel für die zweite Ausführungsvariante gemäß Fig. 2.

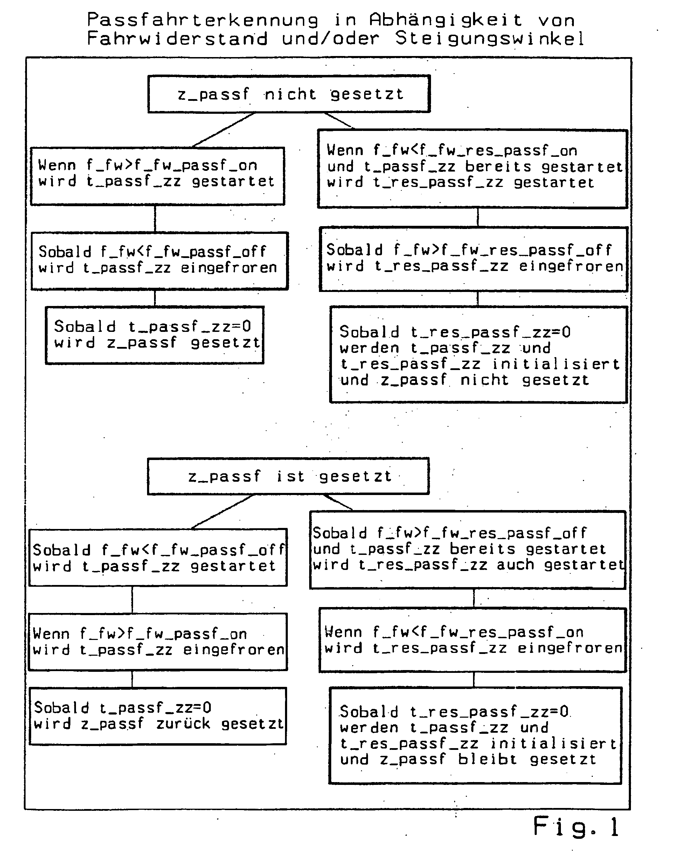

In Fig. 1 ist beispielhaft ein möglicher Ablauf einer ersten Ausführungsvariante des erfindungsgemäßen Verfahrens dargestellt, wobei das Prinzip lediglich anhand des Fahrwiderstands f_fw veranschaulicht ist. Mit demselben Aufbau kann anstelle des Fahrwiderstandes f_fw auch der Steigungswinkel alpha_hang als Parameter zur Passfahrterkennung verwendet werden.

Zum Setzen einer Passfahrterkennung wird ein erster oberer Grenzwert f_fw_passf_on und ein zweiter Grenzwert f_fw_passf_off festgelegt. Wenn der Fahrwiderstand über den ersten Grenzwert f_fw_passf_on ansteigt, wird ein erster Zeitzähler t_passf_zz gestartet und sobald der Fahrwiderstand f_fw unter den zweiten Grenzwert f_fw_passf_off absinkt, wird der erste Zeitzähler t_passf_zz eingefroren. Erreicht der Zeitzähler t_passf_zz den Wert Null wird das Bit Passfahrt gesetzt.

Für die steigungsabhängige Passfahrterkennung gilt als Parameter der erste Grenzwert alpha_hang_passf_on und der zweite Grenzwert alpha_hang_passf_off. Bei der kombinierten Erkennung werden die _on-Grenzwerte mit einer Oder-Verknüpfung und die _off-Grenzwerte mit einer Und-Verknüpfung verbunden.

Zum Verhindern des Setzens der Passfahrterkennung werden wieder als Parameter ein erster Grenzwert f_fw_res_passf_on und als zweiter Grenzwert f_fw_res_passf_off für den Fahrwiderstand f_fw festgelegt. Falls der Fahrwiderstand f_fw unterhalb des ersten Grenzwertes f_fw_res_passf_on absinkt und der erste Zeitzähler t_passf_zz bereits gestartet ist, wird ein zweiter Zeitzähler t_res_passf_zz gestartet und eingefroren, sobald der Fahrwiderstand f_fw über den zweiten Grenzwert f_fw_res_passf_off ansteigt. Sobald der zweite Zeitzähler t_res_passf_zz den Wert Null erreicht, werden beide Zeitzähler t_passf_zz, t_res_passf_zz initialisiert.

Für das steigungswinkelabhängige Verhindern des Setzens der Passfahrterkennung gilt als Parameter der erste Grenz-wert alpha_hang_res_passf_on und der zweite Grenzwert alpha_hang_res_passf_off. Bei der kombinierten Erkennung werden die _on-Grenzwerte mit einer Und-Verknüpfung und die _off-Grenzwerte mit einer Oder-Verknüpfung verbunden.

Wie aus dem Ablaufdiagramm in Fig. 1 weiter ersichtlich ist, wird zum Rücksetzen der Passfahrterkennung derselbe Algorithmus wie zum Setzen der Passfahrterkennung verwendet, jedoch mit vertauschten Grenzwerten. Bei der kombinierten Erkennung werden die _on-Grenzwerte mit einer Oder-Verknüpfung und die _off-Grenzwerte mit einer Und-Verknüpfung verbunden.

Auch zum Verhindern des Rücksetzens der Passfahrterkennung wird der gleiche Algorithmus wie zum Verhindern des Setzens der Passfahrterkennung verwendet, jedoch werden auch hier die Grenzwerte vertauscht. Bei der kombinierten Erkennung werden die _on-Grenzwerte mit einer Und-Verknüpfung und die _off-Grenzwerte mit einer Oder-Verknüpfung verbunden.

In Abhängigkeit des ermittelten Zeitpunktes zum Setzen oder Rücksetzen einer Passfahrterkennung können dann verschiedene Funktionalitäten ausgelöst werden, um eine verbesserte Ansteuerung des Automatgetriebes zu erreichen.

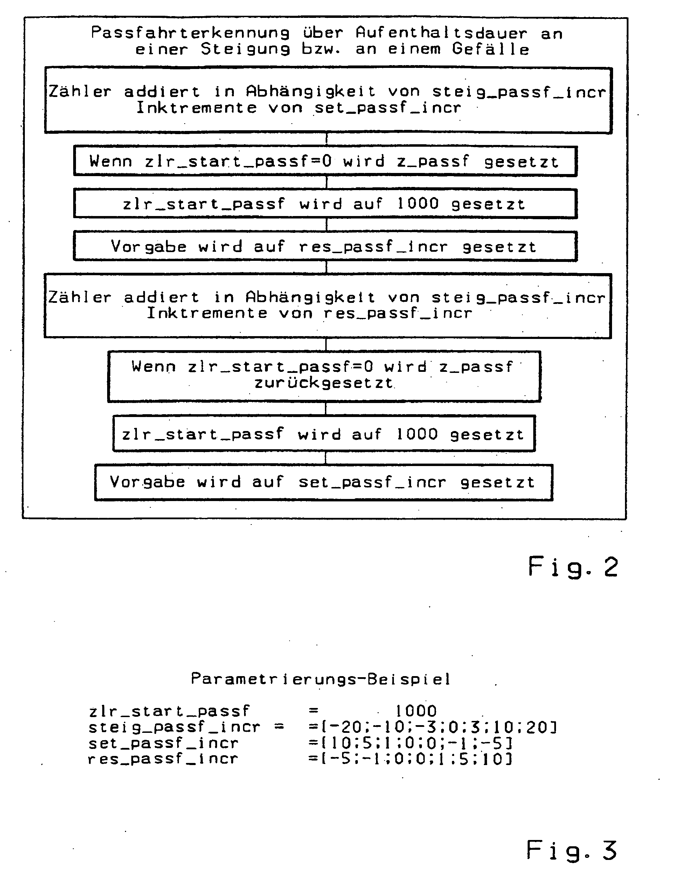

Fig. 2 zeigt beispielhaft den Ablauf einer zweiten Ausführungsvariante des erfindungsgemäßen Verfahrens. Bei dieser Ausführungsvariante können die in Fig. 3 beispielhaft angegebenen Werte des Parametrierungsbeispiels verwendet werden.

Aus dem Ablaufdiagramm in Fig. 2 ist ersichtlich, dass der Zähler über die Kennlinie set_passf_incr vorgegebene Inkremente addiert, wobei der Zähler durch den Startwert zlr_start_passf nach oben begrenzt wird. Erreicht der Zähler den Wert Null, so wird zunächst das Flag z_passfahrt gesetzt. Auch bei dieser Ausführungsvariante werden durch das Setzen der Passfahrterkennung bestimmte Funktionalitäten aktiviert, um Einfluss auf die Ansteuerung des Automatgetriebes zu nehmen.

Danach wird der Zähler auf den Startwert clr_start_passf zurückgesetzt. Die Vorgabe der Inkremente wird auf die Kennlinie res_passf incr zum Zurücksetzen der Passfahrterkennung umgeschaltet.

Zum Rücksetzen der Passfahrterkennung addiert der Zähler wieder die über die Kennlinie res_passf_incr vorgegebenen Inkremente, wobei der Zähler wieder nach oben durch den Startwert clr_start_passf begrenzt wird. Erreicht der Zähler den Wert Null, wird das Flag z_passfahrt zurückgesetzt. An dieser Stelle wird dann die beim Setzen der Passfahrterkennung aktivierte Funktionalität wieder deaktiviert, um die Ansteuerung des Automatgetriebes an die veränderte Fahrstrecke anzupassen.

Der Zähler wird auf den Startwert zlr_start_passf gesetzt und die Vorgabe der Inkremente wieder auf die Kennlinie set_passf incr umgeschaltet.

Es ist zu beachten, dass der Startwert zlr_start_passf auch in jedem Modus wieder erhöht werden kann, da die Kennlinie zum Setzen der Passfahrterkennung set_passf_incr und die Kennlinie zum Zurücksetzen der Passfahrterkennung res_passf_incr auch jeweils positive Werte als Inkremente aufweisen. Dadurch wird bei der Passfahrterkennung berücksichtig, wenn sich das Fahrzeug in einem wechselnden Gelände befindet.

Wenn bei der vorbeschriebenen Ausführungsvariante der Erfindung die in Fig. 3 beispielhaft vorgegebenen Werte verwendet werden, ergibt sich z. B. bei aktivierter Kennlinie zum Setzen einer Passfahrterkennung set_passf_incr bei einer Steigung von 3 % ein Wert Null aus der Kennlinie set_passf_incr. Dieser Wert wird zum Startwert hinzuaddiert. Wenn das Fahrzeug z. B. eine Steigung von 20 % erreicht, ergibt sich ein Wert von minus 5 aus der Kennlinie set_passf_incr. Dieser Wert wird wieder zum Startwert hinzuaddiert. Dadurch verringert sich der Startwert zlr_start_passf entsprechend.

Aus diesem Beispiel wird das Prinzip ersichtlich. Wenn sich das Fahrzeug längere Zeit an einer Steigung befindet, wird der Startwert zlr_start_passf immer wieder verringert, bis er den Wert Null zum Setzen der Passfahrterkennung erreicht. Wenn das Flag z_passf gesetzt ist, wird auf die Kennlinie res_passf_incr umgeschaltet und der Startwert zlr_start_passf wird, wie erwähnt, auf 1 000 zurückgesetzt. Hier wird nach demselben vorbeschrieben Prinzip der Startwert zlr_start_passf beeinflusst, um die Passfahrterkennung wieder zurückzusetzen. Wenn sich beispielsweise das Fahrzeug an einem Gefälle mit einer Steigung von minus 20 % befindet, wird der zugeordnete Wert aus der Kennlinie res_passf_incr, nämlich minus 5, entnommen. Dadurch wird der Startwert zlr_start_passf verringert. Wenn sich das Fahrzeug eine gewisse Zeit an einem Gefälle befindet, wird der Startwert zlr_start_passf irgendwann den Wert Null erreichen und die Passfahrterkennung wird zurückgesetzt.

### Bezugszeichen

- alpha_hang: Steigungswinkel
- f_fw: Fahrwiderstand
- f_fw_passf_on: erster Grenzwert Fahrwiderstand Passfahrterkennung Setzen
- f_fw_passf_off: zweiter Grenzwert Fahrwiderstand Passfahrterkennung Zurücksetzen
- alpha_hang_passf_on: erster Grenzwert Steigungswinkel Passfahrterkennung Setzen
- alpha_hang_passf_off: zweiter Grenzwert Steigungswinkel Passfahrterkennung Zurücksetzen
- f_fw_res_passf_on: erster Grenzwert Fahrwiderstand Passfahrterkennung Setzen verhindern
- f_fw_res_passf_off: zweiter Grenzwert Fahrwiderstand Passfahrterkennung Zurücksetzen verhindern
- alpha_hang_res_passf on: erster Grenzwert Steigungswinkel Passfahrterkennung Setzen verhindern
- alpha_hang_res_passf_off: zweiter Grenzwert Steigungswinkel Passfahrterkennung Zurücksetzen verhindern
- t_passf_zz: erster Zeitzähler
- t_res_passf_zz: zweiter Zeitzähler
- set_passf_incr: Kennlinie zum Setzen der Passfahrt- erkennung
- res_passf_incr: Kennlinie zum Zurücksetzen der Passfahrt- erkennung
- zlr_start_passf: Startwert
- z_passf: Flag Passfahrt Setzen bzw. Rücksetzen
- steig_passf_incr: Neigungskennlinie

## Patentansprüche

1. Verfahren zum fahrstreckenneigungsabhängigen Steuern und/oder Regeln eines Automatgetriebes eines Fahrzeuges, wobei eine Fahrstreckenerkennung in Abhängigkeit der Topographie der Fahrstrecke derart durchgeführt wird, dass ein Zeitpunkt zum Setzen oder Rücksetzen einer Passfahrterkennung ermittelt wird, und das Setzen oder Rücksetzen der Passfahrterkennung in Abhängigkeit eines Fahrwiderstandes (f_fw) des Fahrzeuges und/oder eines Steigungswinkels (alpha) der Fahrstrecke ermittelt wird, wobei zum Erkennen einer Passfahrt ein erster Grenzwert (f_fw_passf_on, alpha_hang passf_on) und ein zweiter Grenzwert (f_fw_passf_off, alpha hang_passf off) für den Fahrwiderstand (f_fw) und/oder für den Steigungswinkel (alpha) festgelegt wird **dadurch gekennzeichnet, dass**, wenn der Fahrwiderstand (f_fw) und/oder der Steigungswinkel (alpha) über den ersten Grenzwert (f_fw_passf_on, alpha_hang_passf_on) steigt, ein erster Zeitzähler (t_passf_zz) gestartet wird, und dass der erste Zeitzähler (t_passf_zz) eingefroren wird, wenn der Fahrwiderstand (f_fw) und/oder der Steigungswinkel (alpha) unterhalb des zweiten Grenzwertes (f_fw_passf_off, alpha_hang_passf_off) absinkt.

2. Verfahren nach Anspruch 1, **dadurch gekennzeichnet, dass** in Abhängigkeit des ermittelten Zeitpunktes zum Setzen oder Rücksetzen der Passfahrterkennung vorbestimmte Funktionen aktiviert oder deaktiviert werden.

3. Verfahren nach Anspruch 1 oder 2, **dadurch gekennzeichnet, dass**, wenn der erste Zeitzähler (t_passf_zz) den Wert Null bzw. einen vorgebbaren Referenzwert erreicht, die Passfahrterkennung gesetzt wird.

4. Verfahren nach einem der Ansprüche 1 bis 3, **dadurch gekennzeichnet, dass** die Passfahrterkennung zurückgesetzt wird, wenn die jeweiligen Bedingungen für das Setzen der Passfahrterkennung vorliegen, wobei der erste Grenzwert (f_fw_passf_on, alpha_hang_passf_on) mit dem zweiten Grenzwert (f_fw_passf_off, alpha_hang_passf_off) vertauscht wird.

5. Verfahren nach einem der vorangehenden Ansprüche, **dadurch gekennzeichnet, dass** zum Setzen oder Rücksetzen der Passfahrterkennung bei der Fahrstreckenerkennung in Abhängigkeit des Fahrwiderstandes (f_fw) und des Steigungswinkels (alpha) die ersten Grenzwerte (f_fw_passf_on, alpha_hang_passf_on) mit einer ODER-Verknüpfung und die zweiten Grenzwerte (f fw passf off, alpha_hang passf off) mit einer UND-Verknüpfung gekoppelt werden.

6. Verfahren nach einem der vorangehenden Ansprüche, **dadurch gekennzeichnet, dass** zum Verhindern des Setzens einer Passfahrterkennung ein erster Grenzwert (f_fw_res_passf_on) und ein zweiter Grenzwert (f_fw_res_passf_off) für den Fahrwiderstand (f_fw) und/oder ein erster Grenzwert (alpha_hang_res_passf_on) und ein zweiter Grenzwert (alpha_hang_res_passf_off) für den Steigungswinkel (alpha) festgelegt werden.

7. Verfahren nach Anspruch 6, **dadurch gekennzeichnet, dass**, wenn der Fahrwiderstand (f_fw) und/oder der Steigungswinkel (alpha) unterhalb des ersten Grenzwertes (f_fw_res_passf_on, alpha_hang_res_passf_on) absinkt und der erste Zeitzähler (t_passf_zz) bereits gestartet ist, ein zweiter Zeitzähler (t_res_passf_zz) gestartet wird, und dass der zweite Zeitzähler (t_res_passf_zz) eingefroren wird, wenn der Fahrwiderstand (f_fw) und/oder Steigungswinkel (alpha) über den zweiten Grenzwert (f_fw_res_passf_off, alpha_hang_res passf_off) ansteigt.

8. Verfahren nach Anspruch 7, **dadurch gekennzeichnet, dass** der erste Zeitzähler (t_passf_zz) und der zweite Zeitzähler (t_res_passf_zz) initialisiert werden, wenn der zweite Zeitzähler (t_res_passf_zz) den Wert Null bzw. einen vorgebbaren Referenzwert erreicht.

9. Verfahren nach einem der Ansprüche 6 bis 8, **dadurch gekennzeichnet, dass** zum Verhindern des Rücksetzens der Passfahrterkennung die Bedingungen für das Verhindern des Setzens der Passfahrterkennung vorliegen, wobei der erste Grenzwert (f_fw_res_passf_on, alpha_hang_res_passf_on) mit dem zweiten Grenzwert (f_fw_res_passf_off, alpha_hang_res_passf_off) vertauscht wird.

10. Verfahren nach einem der Ansprüche 6 bis 9, **dadurch gekennzeichnet, dass** zum Verhindern des Setzens der Passfahrterkennung bei der Fahrstreckenerkennung in Abhängigkeit des Fahrwiderstandes (f_fw) und des Steigungswinkels (alpha) die ersten Grenzwerte (f_fw_res_passf_on, alpha_hang_res_passf_on) mit einer UND-Verknüpfung und die zweiten Grenzwerte (f_fw_res_passf_off, alpha_hang_res_passf_off) mit einer ODER-Verknüpfung gekoppelt werden.

11. Verfahren nach Anspruch 7, **dadurch gekennzeichnet, dass** der erste Zeitzähler (t_passf_zz) und der zweite Zeitzähler (t_res_passf_zz) in Abhängigkeit der aktuellen Fahrwiderstands- und/oder Steigungswinkelwerten inkrementiert bzw. dekrementiert werden.

12. Verfahren nach einem der vorangehenden Ansprüche, **dadurch gekennzeichnet, dass** ein aktueller Zustand bei der Passfahrterkennung beim Ausschalten der Zündung abgespeichert und beim Einschalten der Zündung wieder geladen wird.

13. Verfahren nach einem der vorangehenden Ansprüche, **dadurch gekennzeichnet, dass** die Passfahrterkennung in Abhängigkeit der Aufenthaltsdauer des Fahrzeuges an einer Steigung bzw. einem Gefälle durchgeführt wird.

14. Verfahren nach Anspruch 13, **dadurch gekennzeichnet, dass** eine Neigungskennlinie (steig_passf_incr) anhand der auftretenden Steigung und des auftretenden Gefälles zumindest über eine Kennlinie (set_passf_incr, res_passf_incr) bewertet wird.

15. Verfahren nach Anspruch 14, **dadurch gekennzeichnet, dass** durch einen Zähler von einem Startwert (zlr_start_passf) aus die von den Kennlinien (set_passf incr, res_passf incr) vorgegebenen Inkremente bzw. Dekremente in Abhängigkeit der auftretenden Steigung und des auftretenden Gefälles addiert werden und wenn der Zähler den Wert Null bzw. einen vorgebbaren Referenzwert erreicht, das Flag (z_passf) gesetzt oder zurückgesetzt wird.

## Claims

1. Method for performing open-loop and/or closed-loop control of an automatic transmission of a vehicle on the basis of the angle of inclination of a route, wherein a route-detection process is carried out on the basis of the topography of the route in such a way that a time for setting or resetting a means for detecting a journey through a pass is determined, and the setting or resetting of the means for detecting a journey through a pass is determined on the basis of a travel resistance (f_fw) of the vehicle and/or an angle of gradient (alpha) of the route, wherein, in order to detect a journey through a pass, a first limiting value (f_fw_passf_on, alpha_hang_passf_on) and a second limiting value (f_fw_passf_off, alpha_hang_passf_off) is defined for the travel resistance (f_fw) and/or for the angle of gradient (alpha), **characterized in that** if the travel resistance (f_fw) and/or the angle of gradient (alpha) rises above the first limiting value (f_fw_passf_on, alpha_hang_passf_on), a first counter (t_passf_zz) is started, and **in that** the first counter (t_passf_zz) is frozen if the travel resistance (f_fw) and/or the angle of gradient (alpha) drops below the second limiting value (f_fw_passf_off, alpha_hang_passf_off).

2. Method according to Claim 1, **characterized in that** predetermined functions are activated or deactivated on the basis of the determined time for the setting or resetting of the means for detecting a journey through a pass.

3. Method according to Claim 1 or 2, **characterized in that** if the first counter (t_passf_zz) reaches the value zero or a predefinable reference value, the means for detecting a journey through a pass is set.

4. Method according to one of Claims 1 to 3, **characterized in that** the means for detecting a journey through a pass is reset if the respective conditions for the setting of the means for detecting a journey through a pass apply, wherein the first limiting value (f_fw_passf_on, alpha_hang_passf_on) is interchanged with the second limiting value (f_fw_passf_off, alpha_hang_passf_off).

5. Method according to one of the preceding claims, **characterized in that**, in order to set or reset the means for detecting a journey through a pass during the route-detection process on the basis of the travel resistance (f_fw) and of the angle of gradient (alpha), the first limiting values (f_fw_passf_on, alpha_hang_passf_on) are combined with an OR logic operation and the second limiting values (f_fw_passf_off, alpha_hang_passf_off) are combined with an AND logic operation.

6. Method according to one of the preceding claims, **characterized in that**, in order to prevent the setting of a means for detecting a journey through a pass, a first limiting value (f_fw_res_passf_on) and a second limiting value (f_fw_res_passf_off) are defined for the travel resistance (f_fw) and/or a first limiting value (alpha_hang_res_passf_on) and a second limiting value (alpha_hang_res_passf_off) are defined for the angle of gradient (alpha).

7. Method according to Claim 6, **characterized in that** if the travel resistance (f_fw) and/or the angle of inclination (alpha) drop below the first limiting value (f_fw_res_passf_on, alpha_hang_res_passf_on) and the first counter (t_passf_zz) is already started, a second counter (t_res_passf_zz) is started, and **in that** the second counter (t_res_passf_zz) is frozen if the travel resistance (f_fw) and/or the angle of gradient (alpha) rises above the second limiting value (f_fw_res_passf_ off, alpha_hang_res_passf_off).

8. Method according to Claim 7, **characterized in that** the first counter (t_passf_zz) and the second counter (t_res_passf_zz) are initialized if the second counter (t_res_passf_zz) reaches the value zero or a predefinable reference value.

9. Method according to one of Claims 6 to 8, **characterized in that** the conditions for preventing the setting of the means for detecting a journey through a pass apply for the prevention of the resetting of the means for detecting a journey through a pass, wherein the first limiting value (f_fw_res_passf_on, alpha_hang_res_passf_on) is interchanged with the second limiting value (f_fw_res_passf_off, alpha_hang_res_passf_off).

10. Method according to one of Claims 6 to 9, **characterized in that**, in order to prevent the setting of the means for detecting a journey through a pass during the route-detection process on the basis of the travel resistance (f_fw) and of the angle of gradient (alpha), the first limiting values (f_fw_res_passf_on, alpha_hang_res_passf_on) are coupled with an AND logic operation and the second limiting values (f_fw_res_passf_off, alpha_hang_res_passf_off) are combined with an OR logic operation.

11. Method according to Claim 7, **characterized in that** the first counter (t_passf_zz) and the second counter (t_res_passf_zz) are incremented or decremented on the basis of the current travel-resistance values and/or angle-of-gradient values.

12. Method according to one of the preceding claims, **characterized in that** a current state during the detection of a journey through a pass is stored when the ignition is switched off and loaded again when the ignition is switched on.

13. Method according to one of the preceding claims, **characterized in that** the process of detecting a journey through a pass is carried out on the basis of the period for which the vehicle is present on a positive gradient or a negative gradient.

14. Method according to Claim 13, **characterized in that** an angle-of-inclination characteristic curve (steig_passf_incr) is evaluated on the basis of the positive gradient which occurs and/or the negative gradient which occurs, at least by means of a characteristic curve (set_passf_incr, res_passf_incr).

15. Method according to Claim 14, **characterized in that** from a start value (zlr_start_passf) the increments or decrements which are predefined by the characteristic curves (set_passf_incr, res_passf_incr) are added by a counter on the basis of the positive gradient which occurs and of the negative gradient which occurs, and if the counter reaches the value zero or a predefinable reference value, the flag (z_passf) is set or reset.

## Revendications

1. Procédé de commande et/ou de régulation d'une transmission automatique d'un véhicule en fonction de la pente de sa trajectoire de déplacement, une détection de la trajectoire de déplacement étant réalisée en fonction de la topographie de la trajectoire de déplacement de manière à déterminer l'instant de branchement ou de rebranchement de la détection du passage d'un col, le placement ou le replacement de la détection du passage d'un col étant déterminés en fonction d'une résistance au roulage (f_fw) du véhicule et/ou de l'angle d'inclinaison (alpha) de la trajectoire de déplacement, et dans lequel pour détecter le passage d'un col, une première valeur limite (f_fw_passf_on, alpha_hang_passf_on) et une deuxième valeur limite (f_fw_passf_off, alpha_hang_passf_off) de la résistance au roulage (f_fw) et/ou de l'angle de pente (alpha) sont définies, **caractérisé en ce que**
un premier compteur de temps (t_passf_zz) est lancé lorsque la résistance au roulage (f_fw) et/ou l'angle de pente (alpha) augmentent au-delà de la première valeur limite (f_fw_passf_on, alpha_hang_passf_on) et
**en ce que** le premier compteur de temps (t_passf_zz) est gelé si la résistance au roulage (f_fw) et/ou l'angle de pente (alpha) descendent en dessous de la deuxième valeur limite (f_fw_passf_off, alpha_hang_passf_off).

2. Procédé selon la revendication 1, **caractérisé en ce que** des fonctions prédéterminées sont activées ou désactivées en fonction de l'instant déterminé de branchement ou de rebranchement de la détection du passage d'un col.

3. Procédé selon la revendication 1 ou 2, **caractérisé en ce que** la détection du passage d'un col est branchée lorsque le premier compteur de temps (t_passf_zz) atteint la valeur zéro ou une valeur de référence prédéterminée.

4. Procédé selon l'une des revendications 1 à 3, **caractérisé en ce que** la détection du passage d'un col est rebranchée lorsque les conditions de placement de la détection du passage d'un col sont remplies, la première valeur limite (f_fw_passf_on, alpha_hang_passf_on) étant remplacée par la deuxième valeur limite (f_fw_passf_off, alpha_hang_passf_off).

5. Procédé selon l'une des revendications précédentes, **caractérisé en ce que** pour brancher ou rebrancher la détection du passage d'un col lors de la détection de la trajectoire de déplacement, les premières valeurs limites (f_fw_passf_on, alpha_hang_passf_on) sont couplées par une association logique OU et les deuxièmes valeurs limites (f_fw_passf_off, alpha_hang_passf_off) sont couplées par une association logique ET en fonction de la résistance au roulage (f_fw) et de l'angle de pente (alpha).

6. Procédé selon l'une des revendications précédentes, **caractérisé en ce qu'**une première valeur limite (f_fw_res_passf_on) et une deuxième valeur limite (f_fw_res_passf_off) de la résistance au roulage (f-fw) et/ou une première valeur limite (alpha_hang_res_passf_on) et une deuxième valeur limite (alpha_hang_res_passf_off) de l'angle de pente (alpha) sont définies pour empêcher le branchement d'une détection du passage d'un col.

7. Procédé selon la revendication 6, **caractérisé en ce que** lorsque la résistance au roulage (f_fw) et/ou l'angle de pente (alpha) descendent en dessous de la première valeur limite (f_fw_res_passf_on, alpha_hang_res_passf_on) et **en ce que** le premier compteur de temps (t_res_passf_zz) a déjà été lancé, un deuxième compteur de temps (t_res_passf_zz) est lancé et **en ce que** le deuxième compteur de temps (t_res_passf_zz) est gelé lorsque la résistance au roulage (f_fw) et/ou l'angle de pente (alpha) augmentent au-dessus de la deuxième valeur limite (f_fw_res_passf_off, alpha_hang_res_passf_off).

8. Procédé selon la revendication 7, **caractérisé en ce que** le premier compteur de temps (t_passf_zz) et le deuxième compteur de temps (r_res_passf_zz) sont initialisés lorsque le deuxième compteur de temps (t_res_passf_zz) atteint la valeur nulle ou une valeur de référence prédéterminée.

9. Procédé selon l'une des revendications 6 à 8, **caractérisé en ce que** pour empêcher le rebranchement de la détection du passage d'un col, les conditions de blocage du branchement de la détection du passage d'un col sont remplies, la première valeur limite (f_fw_res_passf_on, alpha_hang_res_passf_on) étant remplacée par la deuxième valeur limite (f_fw_res_passf_off, alpha_hang_res_passf_off).

10. Procédé selon l'une des revendications 6 à 9, **caractérisé en ce que** pour bloquer le branchement de la détection du passage d'un col lors de la détection de la trajectoire de déplacement, les premières valeurs limites (f_fw_res_passf_on, alpha_hang_res_passf_on) sont couplées par une liaison logique ET et les deuxièmes valeurs limites (f_fw_res_passf_off, alpha_hang_res_passf_off) sont couplées par une association logique OU lors de la détection de la trajectoire de déplacement en fonction de la résistance au roulage (f_fw) et de l'angle de pente (alpha).

11. Procédé selon la revendication 7, **caractérisé en ce que** le premier compteur de temps (t_passf_zz) et le deuxième compteur de temps (t_res_passf_zz) sont incrémentés ou décrémentés en fonction des valeurs effectives de la résistance au roulage et/ou de l'angle de pente.

12. Procédé selon l'une des revendications précédentes, **caractérisé en ce que** la situation qui prévaut lors de la détection du passage d'un col est conservée en mémoire lors de la coupure de l'allumage et est rechargée lors du branchement de l'allumage.

13. Procédé selon l'une des revendications précédentes, **caractérisé en ce que** la détection du passage d'un col est réalisée en fonction de la durée de présence du véhicule sur une pente montante ou descendante.

14. Procédé selon la revendication 13, **caractérisé en ce qu'**une ligne caractéristique de pente (steig_passf_incr) est évaluée à l'aide de la pente montante ou descendante qui prévaut, au moins par l'intermédiaire d'une ligne caractéristique (set_passf_incr, res_passf_incr).

15. Procédé selon la revendication 14, **caractérisé en ce qu'**à partir d'un instant initial (zir_start_passf), un compteur additionne des incréments ou décréments prédéterminés par les lignes caractéristiques (set_passf_incr, res_passf_incr) en fonction de la pente montante ou descendante qui prévaut et **en ce que** l'indicateur (z_passf) est affiché ou retiré lorsque le compteur atteint la valeur nulle ou une valeur de référence prédéterminée.
